# EUROPÄISCHE PATENTSCHRIFT

(11) **EP 2 545 326 B1**
(45) Veröffentlichungstag und Bekanntmachung des Hinweises auf die Patenterteilung: **27.01.2016**
(21) Anmeldenummer: 11722272.9
(22) Anmeldetag: 09.03.2011
(51) Int. Cl.: F24D 19/08, B01D 19/00, F16K 24/00, F16K 24/04, F16L 55/07

(54) **PLATZSPARENDE ENTLÜFTUNG VON GESCHLOSSENEN, IN ÜBERDRUCK GEGEN DIE ATMOSPHÄRE STEHENDEN ROHRSYSTEMEN MIT ZENTRALER, ORTSUNABHÄNGIGER ENTLÜFTUNGSSTELLE**
SPACE-SAVING PURGING SYSTEM FOR PRESSURE-CLOSED PIPE SYSTEMS COMPRISING CENTRAL, LOCATION-INDEPENDENT VENTILATION POINTS
SYSTÈME DE PURGE PEU ENCOMBRANT POUR SYSTÈMES DE TUYAUTERIE FERMÉS À SURPRESSION, COMPORTANT UN POINT DE PURGE CENTRAL INDÉPENDANT DE L'EMPLACEMENT DE LA TUYAUTERIE

(30) Priorität: 09.03.2010 AT 3672010
(43) Veröffentlichungstag der Anmeldung: 16.01.2013
(73) Patentinhaber: WS-System GmbH, 8054 Graz (AT)
(72) Erfinder: Pickl, Matthias, 8046 Graz (AT); Pickl, Florian, 8046 Graz (AT)
(74) Vertreter: Margotti, Herwig Franz
(86) Internationale Anmeldenummer: PCT/AT2011/000118
(87) Internationale Veröffentlichungsnummer: WO 2011/109846

(56) Entgegenhaltungen:
- WO-A1-00/20794
- DE-A1- 2 316 885
- DE-U1- 9 012 672
- GB-A- 2 117 662
- GB-A- 2 231 508
- GB-A- 2 432 405
- US-A1- 2004 113 425

## Beschreibung

Die vorliegende Erfindung bezieht sich auf eine Vorrichtung für Rohrsysteme bzw. Energieversorgungssysteme mit flüssigen Transportmedien wie beispielsweise Heizungswasser, Kühlwasser, Solegemische und dergleichen als Inhalt, welche die Entlüftung sämtlicher Rohre von einer zentralen Stelle aus erlaubt, vornehmlich zum Einsatz in horizontal verlegten Rohren aber auch in senkrecht verlegten bzw. in jedweder Raumachse stehenden Rohren (z.B. Strangentlüftung).

In Kombination führt dies vor allem zur Minimierung von Wartungs- aber auch Materialkosten wie auch zu einer erheblichen Erleichterung bei der Installation und einer damit verbundenen Zeitersparnis.

Das hierin beschriebene Entlüftungssystem stellt eine Verbesserung gegenüber herkömmlichen Rohrleitungen und den üblichen Entlüftungssystemen dar, da es eine wesentlich leichtere Wartung ermöglicht und mit wesentlich weniger Materialkosten hergestellt werden kann.

Bei herkömmlichen Rohren, welche über längere Strecken horizontal verlegt werden sollen, stellt sich das Problem der Entlüftung des mit der Zeit anfallenden Gases. Das anfallende Gas kann der Umwälzpumpe einen derartig großen Widerstand bieten, dass eine Aufrechterhaltung der Flüssigkeitszirkulation im Rohrsystem unmöglich wird und somit das Zirkulationssystem nicht mehr funktioniert. Bisher wird diese Problematik damit gelöst, dass die Rohre in an- und absteigendem Verlauf, salopp also im Zickzack, verlegt werden. Das Gas sammelt sich entsprechend seinem Verhalten immer am höchsten Punkt im Leitungssystem, also in den oberen Winkeln der Zickzacklinie, an welchen sie mit einem Schwimmerventil zur Entlüftung versehen sind. Angewendet auf eine längere Rohrleitung werden dementsprechend viele Ventile benötigt. Bei der Entlüftung selbst stellt sich dann das Problem, dass man zu jedem einzelnen Schwimmerventil gehen muss, um die Rohrleitung ebendort zu entlüften. Da die Rohre in einer Zwischendecke verlegt werden ist dies eine recht aufwendige Arbeit.

Aus der WO 00/20794 A1, die als nächstliegender Stand der Technik angesehen wird, sowie der DE 2316885 A1 sind solche Entlüftungen aus Rohrsystemen bekannt, die am höchsten Punkt ein künstlich erzeugten Hohlraum aufweisen, um eine Luftsammelkammer zu erzeugen, wobei die geschilderten Probleme auftreten.

Eine Aufgabe der vorliegenden Erfindung ist es demnach, den Entlüftungsprozess von Rohren zu erleichtern und zu beschleunigen.

Eine weitere Aufgabe der Erfindung ist es, den Materialaufwand zur Herstellung eines Entlüftungssystems sowie den Installationsaufwand zu minimieren und vor allem den Verlust an Bauvolumen zu verringern.

Ein großer Vorteil der Erfindung besteht in der Möglichkeit, handelsübliche Elemente, wie Autoreifenventile, Schiebemuffen, Reduktionen etc. einzusetzen.

Eine weitere Aufgabe der Erfindung ist es, die beim Entlüftungsvorgang anfallende Verwurfflüssigkeit über ein Pumpensystem dem Rohrsystem wieder rückzuführen.

Die Komponenten der vorliegenden Erfindung setzen sich zusammen aus einem Metallrohrformstück mit einem nach oben ausgepressten Höcker, welcher dazu dient, überschüssiges Gas anzusammeln und nie höher ist als die Rohrisolierung bzw. die geringste Aufhängevorrichtung. Von außen in diesen Höcker bzw. Ausbuchtung hineinragend verläuft ein Kapillarrohr, über welches das Gas im Überdruck abgeleitet werden kann. Die von vielen dieser Ausbuchtungen ausgehenden Kapillarrohre kommunizieren miteinander über druck-/und temperaturbeständige Kunststoffrohre, werden also untereinander verbunden, um sich an einem zentralen Ort zu treffen, von dem aus eine Entlüftung aller Rohrsegmente gleichzeitig vorgenommen werden kann.

Es ist denkbar die Ausbuchtung in der sich das Gas sammelt in jeglicher Form auszugestalten. Das beim Entlüftungsvorgang teilweise ausgeschiedene Medium kann dann aus einem Sammelbehälter mittels einer Membranpumpe wieder dem Rohrsystem rückgeführt werden, sodass nur die Luft aus dem Rohrsystem ausgeschieden wird, das Medium aber verlustfrei rückgeführt werden kann.

Nach einer weiteren Ausführungsform der Erfindung kann man anstatt eines Metallrohrformstückes mit ausgepresstem Höcker auch handelsübliche Pressrohrformstücke mit seriellen Reduktionen und Dimensionssprung zur Erzeugung eines Reservoirs zur Gasansammlung einsetzen.

Es ist auch denkbar, die Erfindung in senkrecht stehenden Wellrohrspiralen einzusetzen, wodurch eine Entlüftung am tiefsten Punkt durchgeführt werden kann.

Die Erfindung wird anhand der Zeichnungen beispielsweise erläutert.

Es zeigen:

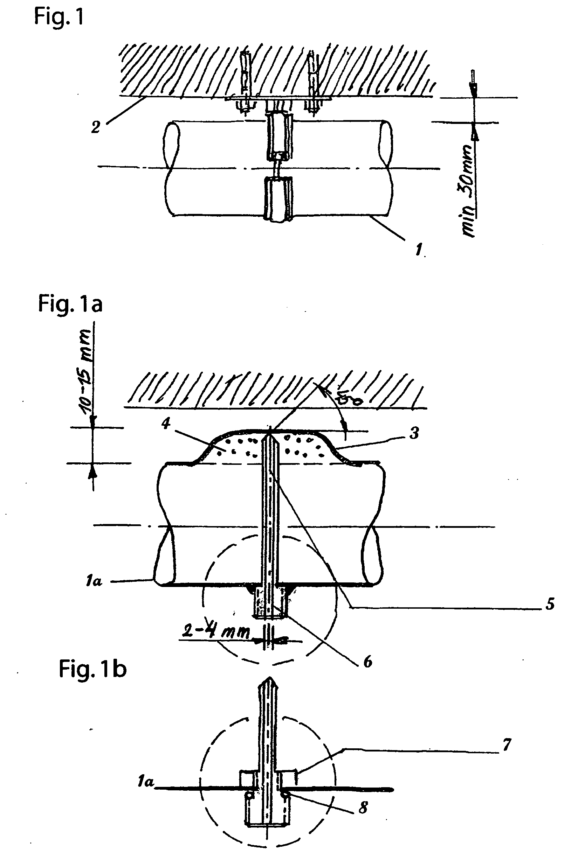

- Figur 1: schematisch einen Schnitt durch ein übliches, deckennahes, horizontales Rohr
- Figur 1a: schematisch einen Schnitt durch eine Variante der Erfindung, wobei das Kapillarrohr mittels Schweißnaht befestigt ist,
- Figur 1 b: schematisch einen Schnitt durch eine Variante der Erfindung, wobei das Kapillarrohr mittels Verschraubung befestigt ist,
- Figur 2: schematisch einen Schnitt durch eine weitere Variante der Erfindung, wobei hierbei handelsübliche Pressrohrformstücke mit seriellen Reduktionen und Dimensionssprung zum Einsatz kommen,
- Figur 3: schematisch einen Schnitt durch die Anschlussvorrichtung zwischen Kapillarrohr und Entlüftungsleitung,
- Figur 4: schematisch einen Schnitt durch eine zentrale Entlüftungsstelle zum Einbau in eine handelsübliche Unterputzdose,
- Figur 4a: schematisch einen Schnitt AA durch ein Entlüftungsventil, wie in Figur 4 gezeigt,
- Figur 5: schematisch einen Schnitt durch einen Schnellentlüftungsanschluss zum Anschluss an die zentrale Entlüftungsstelle mit Anschluss zum Ablauf oder Wassersammelgefäß,
- Figur 6: schematisch einen Schnitt durch eine Vorrichtung zur Rückführung der beim Entlüftungsvorganges ausgeschiedenen Flüssigkeit,
- Figur 8: schematisch einen Schnitt durch mehrere Gebäudegeschoße und miteinander verbundener Entlüftungsstellen,
- Figur 9: schematisch einen Schnitt durch die Erfindung eingesetzt als horizontale Rohrtrassenentlüftung und
- Figur 10: schematisch einen Schnitt durch eine weitere Variante der Erfindung in einer Rohrwendel.

Die in Figur 1a gezeigte Ausführungsform der Erfindung besteht aus einem Metallrohrformstück 1a, welches einen nach oben ausgepressten Höcker 3 von beispielsweise 10-15mm Höhe aufweist, in dem sich überschüssiges Gas 4 ansammelt und sich zwischen hier nicht gezeigten Enden zweier Rohre befindet, welche mit Flüssigkeit befüllt sind.

Die Figur 1 zeigt, dass der Abstand zwischen einem handelsüblichen Rohr 1 und der Decke 2 mindestens 30mm beträgt, und somit genügend Platz für den Höcker 3 vorhanden ist. Von unten in das Metallrohr ragt ein Kapillarrohr 5, welches in der hier gezeigten Ausführungsform der Erfindung mittels Schweißnähten fixiert wird und sich dadurch kennzeichnet, dass es an seiner nach oben ragenden Spitze im Winkel von beispielsweise 45° beidseitig angeschrägt ist, um eine Entlüftung zu ermöglichen. Ein flach abgeschnittenes Kapillarrohr würde an der Wand des Metallrohrformstücks anstehen und somit eine Entlüftung unmöglich machen. Das Kapillarrohr hat beispielsweise einen Innendurchmesser von 2-4mm und ist mitsamt Anschlussgewinde 6 für die hier nicht gezeigte Entlüftungsleitung am Rohr verschweißt.

In Figur 1 b wird eine weitere Variante der Erfindung gezeigt, wobei das Kapillarrohr 5 nicht mittels Schweißnaht, sondern mittels einer Mutter 7 und einem O-Ring 8 zur Dichtung in das Metallrohr 1 a verschraubt wird.

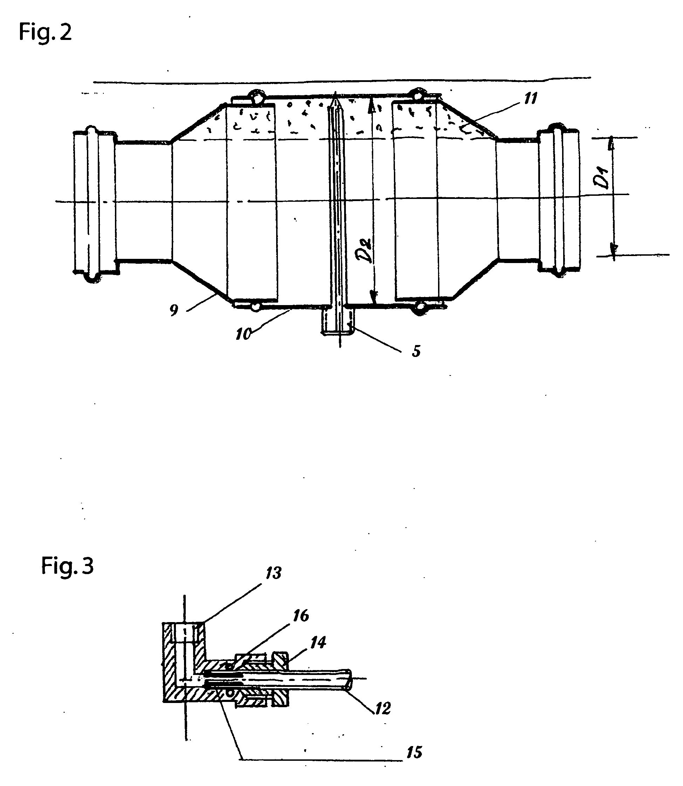

Die Figur 2 zeigt eine weitere Variante der Erfindung, wobei kein Rohrformstück 1 a zur Verwendung kommt, sondern handelsübliche Pressrohrformstücke mit seriellen Reduktionen 9, welche über eine Schiebemuffe 10 miteinander verbunden sind und einen Dimensionssprung vom Durchmesser D1 auf D2 bewirken. Hierdurch entsteht wieder ein Hohlraum 11, der die Funktion des Höckers 3 übernimmt und überschüssiges Gas ansammelt. Von unten führt wiederum ein Kapillarrohr 5 in den Luftsammler 11, welches entweder entsprechend Figur 1 a bzw. 1 b verschweißt oder verschraubt ist.

Figur 3 zeigt eine Anschlussvorrichtung zwischen Kapillarrohr 5 und Entlüftungsleitung 12. Das Innengewinde 13 wird hierzu mit dem Anschlussgewinde 6 verschraubt. Die Entlüftungsleitung 12 wird mittels Klemmverschraubung 14 zur Axialsicherung verbunden, und weist außerdem an seinem Verbindungsende eine Stützhülse 15 auf, welche für ein offenes Rohrlumen sorgt. Zur Dichtung wird ein O-Ring 16 verwendet. Die Entlüftungsleitung 12 besteht aus einem druck- und temperaturbeständigen Kunststoffrohr und führt zu einer zentralen Entlüftungsstelle 17, welche an jedem beliebigen Ort angebracht werden kann.

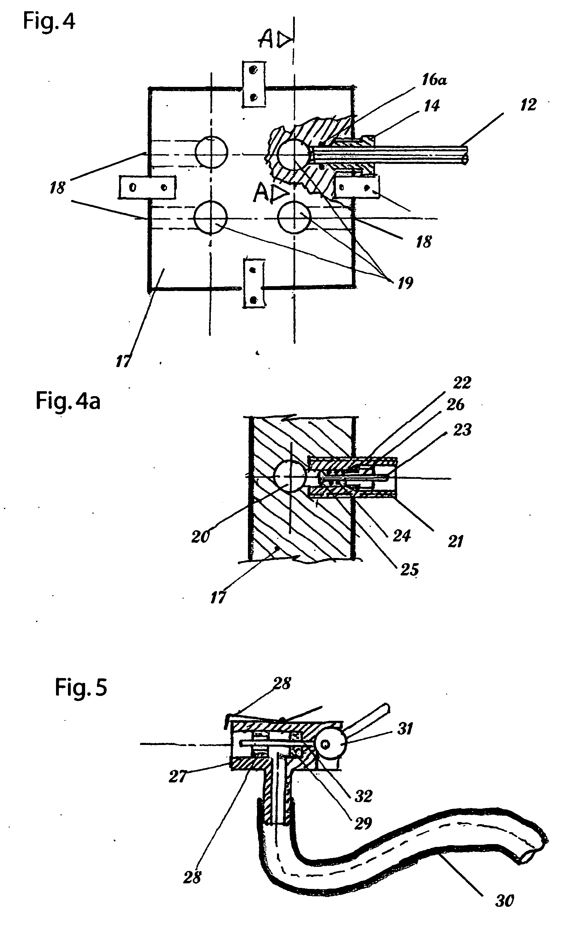

Figur 4 zeigt eine zentrale Entlüftungsstelle 17 aus einem beispielsweise Kunststoffblock, welcher beispielsweise 4 Vorbohrungen 18 zum Anschluss von Entlüftungsrohren 12 aufweist, die ebenfalls über eine Klemmverschraubung 14 wie in Figur 3 mit O-Ring 16a zur Dichtung befestigt werden. Die zuführenden Entlüftungsrohre 12 können dann ganz einfach über die zugehörigen Entlüftungsventile 19, welche aus beispielweise handelsüblichen Autoreifenlüftungsventilen bestehen, mittels eines serienmäßigen Schnellentlüftungsanschlusses wie in Figur 5 entlüftet werden.

In Figur 4a wird der Schnitt AA aus Figur 4, der den Anschluss 20 eines Entlüftungsrohres 12 in der zentralen Entlüftungsstelle 17 veranschaulicht, gezeigt und die Bestandteile eines handelsüblichen, beispielsweise Autoreifenbelüftungsventils 21, bestehend aus Dichtung 22, Ventilstössel 23, Ventilfeder 24, Ventildichtung 25 und Ventilverschraubung 26 erörtert, um die Funktionsweise des in Figur 5 gezeigten Schnellentlüftungsanschlusses besser zu erklären.

Der in Figur 5 dargestellte Schnellentlüftungsanschluss wird über einen Adapter 27 mittels einer Sicherungsklappe 28 an dem Ventil 21 der zentralen Entlüftungsstelle befestigt. Zum Entlüftungsventil 21 ist der Adapter 27 mittels einer Gummidichtung 28 luftdicht abgeschlossen, lässt jedoch die Luft am Ventilöffnungsstössel 32 vorbei, die in den Luft-Flüssigkeitsschlauch 30 gelangt, da eine weitere Dichtung 29 den Luftaustritt nur in diese Richtung erlaubt. Der eigentliche Entlüftungsvorgang wird dann durch Betätigen eines Exzenterhebels 31 durchgeführt, welcher den Ventilöffnungsstössel 32 in Richtung Ventilstössel 23 bewegt. Das Gas kann nun in den Luft-Flüssigkeitsschlauch 30 entweichen, welcher zu einem Sammelgefäß 33 führt, in dem zusätzlich anfallende Flüssigkeit gesammelt wird.

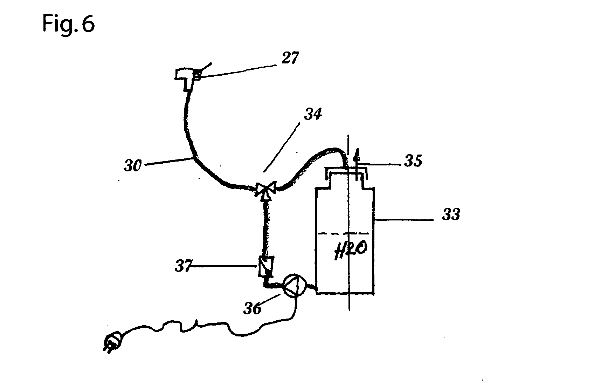

Figur 6 zeigt schematisch den Aufbau eines solchen Sammelgefäßes 33. Über den Entnahmeadapter 27 gelangt die Luft im Luft-Flüssigkeitsschlauch 30 über eine Dreiwegeventil 34 in den Flüssigkeitssammelbehälter 33. Luft kann über eine Entlüftung 35 entweichen. Die gesammelte Flüssigkeit kann nun mittels einer beispielsweise elektrischen Membranpumpe 36 nach Umschalten des Dreiwegeventils 34 über ein Rückschlagventil 37 wieder ins Rohrsystem zurückgeführt werden.

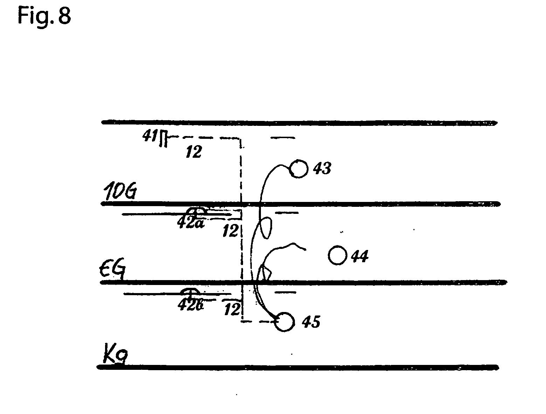

Durch Figur 8 wird veranschaulicht, wie die aus mehreren Geschoßen kommenden Entlüftungsleitungen, beispielsweise von einer Strangentlüftung 41, und zwei Trassenentlüftungen 42a und 42b aus Erdgeschoß und Kellergeschoß zusammengeführt werden und anschließend über eine zentrale Entnahmestelle an jeder beliebigen Position beispielsweise 43, 44, oder 45 entlüftet werden können. Unterschiedliche Entlüftungsstellen 41, 42a, 42b in Lage und Funktion können so auf einer gemeinsamen Entlüftungsleitung 12 gesammelt werden, wobei die Prüfstelle wie auch Flüssigkeitsrückführungsstelle 43, 44, 45 willkürlich festgelegt werden kann.

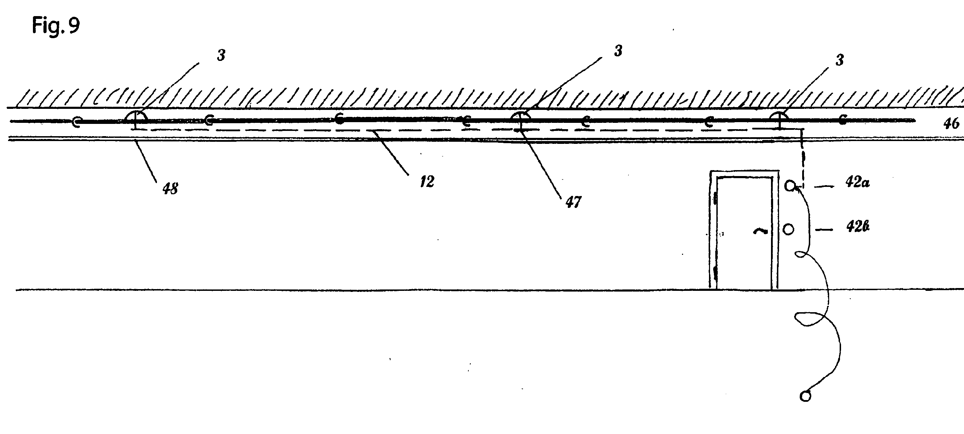

In Figur 9 wird der Einsatz der Erfindung als Rohrtrassenentlüftung veranschaulicht. Rohrtrassen 46 können waagrecht in der abgehängten Gangdecke 48 über mehrere 100 Laufmeter verlegt und mit wenigen Höckern 3, verbunden über T-Stücke 47 mit der parallel dazu verlaufenden Kapillarrohrentlüftungsleitung 12, zentral an jeder x-beliebigen Stelle im Geschoß 42a oder Keller 42b entlüftet werden. Die Vorteile, wie geringer Investitionsaufwand, enorme Zeitersparnis bei Inbetriebnahme als auch beim jahrzehntelangem Service, liegen auf der Hand.

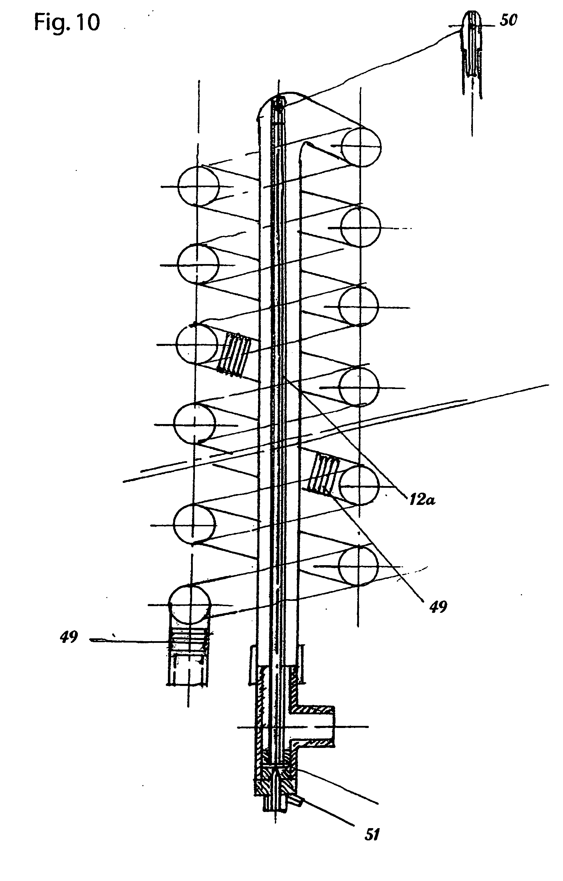

Die in Figur 10 gezeigte Variante zeigt den Einsatz der Erfindung in einer stehenden Rohrwendel 49 um eine Entlüftung an jedem beliebigen Ort vornehmen zu können, was derzeit durch Schwimmerventilentlüftung nicht möglich ist. Hierbei wird in ein Wellrohr 49 das Kunststoffkapillarrohr 12a bis zum höchsten Punkt 12b eingeschoben, wobei sich an der Spitze des Kapillarrohrs 12a eine abgerundete Tülle befindet, welche mit zentralen als auch seitlichen Bohrungen 50 versehen ist und ein problemloses Einführen (Gleiten) in die Rohrwendel 49 ermöglicht. Über ein handelsübliches Entlüftungsventil 51 kann dann die Entlüftung vorgenommen werden.

## Patentansprüche

1. Vorrichtung zur Entlüftung von Rohrsystemen mit unter Druck stehenden Energietransportmedien, wobei die Entlüftung des gesamten Rohrsystems von einem beliebig wählbaren, zentralen Ort (17) aus durch Einbringen eines Kapillarrohrs (5, 12a, 40) möglich ist, **dadurch gekennzeichnet, dass** das Kapillarrohr (5, 12a, 40) am tiefsten Punkt des Rohrsystems eingebracht und befestigt wird und durch Energietransportmedium bis zum höchsten Punkt des Rohrsystems reicht, das am höchsten Punkt einen künstlich erzeugten Hohlraum (3, 11), vorzugsweise in Form eines Höckers (3), aufweist, um eine Luftsammelkammer (11) zu erzeugen.

2. Vorrichtung nach Anspruch 1, **dadurch gekennzeichnet, dass** in den Höcker (3) bzw. die Luftsammelkammer (11) ein mit dem Metallrohrformstück (1 a) bzw. der Schiebemuffe (10) beispielsweise verschweißtes oder verschraubtes Kapillarrohr (5) bis zum Hochpunkt hineinragt über welches Gas abgeleitet werden kann.

3. Vorrichtung nach Anspruch 1 oder 2, **dadurch gekennzeichnet, dass** das Kapillarrohr (5) beispielsweise mit 45° angeschrägt ist.

4. Vorrichtung nach einem der Ansprüche 1 bis 3, **dadurch gekennzeichnet, dass** das Kapillarrohr (5) über ein beispielsweise verschraubbares Zwischenstück mit einem Entlüftungsrohr (12) verbunden wird, welches parallel zum Rohr verläuft und zu einer zentralen Entlüftungsstelle (17) läuft, wo dieses über eine vorzugsweise Klemmverschraubung (14) zur Axialsicherung festgemacht ist, aber auch der Einsatz handelsüblicher Steckverbindungen möglich ist.

5. Vorrichtung nach Anspruch 4, **dadurch gekennzeichnet, dass** das Entlüftungsrohr (12) mit anderen Entlüftungsrohren kommuniziert und gemeinsam zu einer zentralen Entlüftungsstelle (17) führt.

6. Vorrichtung nach Anspruch 5, **dadurch gekennzeichnet, dass** die Entlüftungsrohre (12) in der zentralen Entlüftungsstelle (17) über die Klemmverschraubung oder Steckverbindung in ein beispielsweise handelsübliches Autoreifenbelüftungsventil (21) führen.

7. Vorrichtung nach Anspruch 6, **dadurch gekennzeichnet, dass** das Autoreifenbelüftungsventil (21) nicht zur Belüftung, sondern mittels eines Adapters (27), nach betätigen des Exzenterhebels (31) zum Entlüften verwendet werden kann.

8. Vorrichtung nach Anspruch 6 bis 7, **dadurch gekennzeichnet, dass** ein Luft-Flüssigkeitsschlauch (30) von einem Adapter (27) zur Entlüftung wegführt, um Flüssigkeit in einem Behälter (33) zu sammeln.

9. Vorrichtung nach Anspruch 8, **dadurch gekennzeichnet, dass** der Luft-Flüssigkeitsschlauch (30) ein Dreiwegeventil (34) aufweist.

10. Behälter nach Anspruch 8 oder 9, **dadurch gekennzeichnet, dass** Flüssigkeit dem Rohrsystem durch eine Membranpumpe (36) über ein Rückschlagventil (37) verlustlos rückgeführt wird.

11. Vorrichtung nach Anspruch 1, **dadurch gekennzeichnet, dass** das zur einer zentralen Entlüftungsstelle (17) führende Entlüftungsrohr (12) über einen Gewindeanschluss (39a) direkt an einem Rohrstrang befestigt ist.

12. Vorrichtung nach Anspruch 1, **dadurch gekennzeichnet, dass** eine Kapillarnadel (40) zur Entlüftung eines Rohrstranges bis in den höchsten Punkt des Rohres führt und entweder verschweißt oder verschraubt befestigt ist und mit dem Entlüftungsrohr (12) verbunden ist.

13. Vorrichtung nach Anspruch 1, **dadurch gekennzeichnet, dass** eine Entlüftung einer Wellrohrwendel (49) von einer beliebigen zentralen Stelle aus möglich ist, und ein Kapillarrohr (12a) mit abgerundeter und mehrfach durchbohrter Tülle (50) an der Spitze bis zum höchsten Punkt der Wellrohrwendel eingeführt ist und über ein beispielsweise handelsübliches Entlüftungsventil (51) entlüftet werden kann.

## Claims

1. A device for venting pipe systems with pressurized energy transport media, wherein the venting of the entire pipe system is possible from any selectable central location (17) by introducing a capillary pipe (5, 12a, 40), **characterized in that** the capillary pipe (5, 12a, 40) is introduced and attached at the lowest point of the pipe system and extends through the energy transport medium as far as to the highest point of the pipe system, which comprises, at the highest point, an artificially produced cavity (3, 11), preferably in the form of a hump (3), in order to generate an air collection chamber (11).

2. A device according to claim 1, **characterized in that** a capillary pipe (5) which, for example, is welded or screwed to the metal pipe fitting (1a) or the sliding sleeve (10), respectively, projects into the hump (3) or the air collection chamber (11), respectively, up to the maximum point via which gas can be discharged.

3. A device according to claim 1 or 2, **characterized in that** the capillary pipe (5) is bevelled, for example, by 45°.

4. A device according to any of claims 1 to 3, **characterized in that** the capillary pipe (5) is connected via an intermediate piece, which, for example, is screwable, to a vent pipe (12) running parallel to the pipe and to a central venting point (17), where said pipe is fastened for axial securing preferably by means of a clamp connection (14), but the use of commercially available plug connections is possible as well.

5. A device according to claim 4, **characterized in that** the vent pipe (12) communicates with other vent pipes and jointly leads to a central venting point (17).

6. A device according to claim 5, **characterized in that** the vent pipes (12) in the central venting point (17) lead via the clamp connection or the plug connection into a car tyre air valve (21), which, for example, is commercially available.

7. A device according to claim 6, **characterized in that** the car tyre air valve (21) ist not used for aeration, but can be used for venting by means of an adapter (27) upon actuation of the eccentric lever (31).

8. A device according to claims 6 to 7, **characterized in that** an air-liquid tube (30) leads away from an adapter (27) for venting in order to collect liquid in a container (33).

9. A device according to claim 8, **characterized in that** the air-liquid tube (30) comprises a three-way valve (34).

10. A device according to claim 8 or 9, **characterized in that** liquid is recycled in a loss-free manner to the pipe system through a diaphragm pump (36) via a check valve (37).

11. A device according to claim 1, **characterized in that** the vent pipe (12) leading to a central venting point (17) is directly attached to a pipe run via a threaded connection (39a).

12. A device according to claim 1, **characterized in that** a capillary needle (40) for venting a pipe run leads as far as to the highest point of the pipe and is attached in either a welded or screwed manner and is connected to the vent pipe (12).

13. A device according to claim 1, **characterized in that** venting of a corrugated pipe coil (49) is possible from any central point and a capillary pipe (12a) with a rounded and multiple-pierced spout (50) is introduced at the top as far as to the highest point of the corrugated pipe coil and can be vented via an air valve (51), which, for example, is commercially available.

## Revendications

1. Dispositif servant à purger des systèmes de tuyauterie avec des milieux de transport d'énergie sous pression, sachant que la purge de l'ensemble du système de tuyauterie est possible depuis un emplacement (17) central pouvant être choisi de manière quelconque par l'introduction d'un tuyau capillaire (5, 12a, 40), **caractérisé en ce que** le tuyau capillaire (5, 12a, 40) est introduit et fixé au niveau du point le plus bas du système de tuyauterie et parvient par le milieu de transport d'énergie jusqu'au point le plus haut du système de tuyauterie, qui présente au niveau du point le plus haut un espace creux (3, 11) produit de manière artificielle, de préférence sous la forme d'une bosse (3) afin de produire un compartiment collecteur d'air (11).

2. Dispositif selon la revendication 1, **caractérisé en ce qu'**un tuyau capillaire (5) allant jusqu'au point en hauteur, par exemple soudé ou vissé à l'embout tubulaire métallique (1a) ou au manchon coulissant (10), dépasse à l'intérieur de la bosse (3) ou du compartiment collecteur d'air (11), par l'intermédiaire duquel tuyau capillaire du gaz peut être dévié.

3. Dispositif selon la revendication 1 ou 2, **caractérisé en ce que** le tuyau capillaire (5) est biseauté par exemple à 45°.

4. Dispositif selon l'une quelconque des revendications 1 à 3, **caractérisé en ce que** le tuyau capillaire (5) est relié, par l'intermédiaire d'une pièce intermédiaire par exemple pouvant être vissée, à un tuyau de purge (12), qui s'étend de manière parallèle par rapport au tuyau et qui mène jusqu'à un emplacement de purge (17) central, où ce dernier est bloqué aux fins de l'immobilisation axiale par l'intermédiaire de préférence d'un système de vissage par serrage (14), où toutefois l'utilisation de raccords enfichables disponibles dans le commerce est également possible.

5. Dispositif selon la revendication 4, **caractérisé en ce que** le tuyau de purge (12) communique avec d'autres tuyaux de purge et mène conjointement à un emplacement de purge (17) central.

6. Dispositif selon la revendication 5, **caractérisé en ce que** les tuyaux de purge (12) dans l'emplacement de purge (17) central mènent, par l'intermédiaire du système de vissage par serrage ou du raccord enfichable, dans une soupape d'aération pneumatique (21) disponible dans le commerce par exemple.

7. Dispositif selon la revendication 6, **caractérisé en ce que** la soupape d'aération pneumatique (21) peut être utilisée non pas aux fins de l'aération, mais, au moyen d'un adaptateur (27), après l'actionnement du levier excentrique (31), aux fins de la purge.

8. Dispositif selon la revendication 6 à 7, **caractérisé en ce qu'**un tuyau flexible d'air-liquide (30) part d'un adaptateur (27) aux fins de la purge afin de collecter du liquide dans un réservoir (33).

9. Dispositif selon la revendication 8, **caractérisé en ce que** le tuyau flexible d'air-liquide (30) présente une soupape à trois voies (34).

10. Réservoir selon la revendication 8 ou 9, **caractérisé en ce que** du liquide est refoulé sans perte au système de tuyauterie par une pompe à membrane (36) par l'intermédiaire d'une soupape anti-retour (37).

11. Dispositif selon la revendication 1, **caractérisé en ce que** le tuyau de purge (12) menant à l'emplacement de purge (17) central est fixé directement au niveau du train de tuyaux par l'intermédiaire d'un système de connexion fileté (39a).

12. Dispositif selon la revendication 1, **caractérisé en ce qu'**une aiguille capillaire (40) mène, aux fins de la purge d'un train de tuyaux, jusqu'au point le plus haut du tuyau et est fixée soit par un soudage soit par un vissage et est reliée au tuyau de purge (12).

13. Dispositif selon la revendication 1, **caractérisé en ce qu'**une purge d'un tuyau hélicoïdal annelé (49) est possible depuis un emplacement central quelconque, et **en ce qu'**un tuyau capillaire (12a) comprenant une douille (50) arrondie et perforée à plusieurs reprises au niveau de la pointe est introduit jusqu'au point le plus haut du tuyau hélicoïdal annelé et peut être purgé par l'intermédiaire d'une soupape de purge (51) disponible dans le commerce par exemple.
